# EUROPEAN PATENT APPLICATION

(11) **EP 4 848 431 A1**
(43) Date of publication of application: **02.12.2026**
(21) Application number: 24921346.3
(22) Date of filing: 01.08.2024
(51) Int. Cl.: H01M 50/244

(54) **BATTERY AND VEHICLE**

(30) Priority: 31.01.2024 CN 202410137380
(71) Applicant: Contemporary Amperex Technology Co., Limited, Ningde, Fujian 352100 (CN)
(72) Inventor: LONG, Chao, Ningde, Fujian 352100 (CN); CHEN, Xingdi, Ningde, Fujian 352100 (CN); ZHANG, Wenhui, Ningde, Fujian 352100 (CN); WANG, Peng, Ningde, Fujian 352100 (CN)
(74) Representative: Gong, Jinping
(86) International application number: PCT/CN2024/109160
(87) International publication number: WO 2025/161314

(57) **Abstract**

The present application provides a battery (10) and a vehicle (1). The battery (10) includes a box (200), a cell (100), and a heat exchange assembly (300). The box (200) is configured to accommodate the cell (100). The box (200) includes a cover (210). The cover (210) includes a cover plate (211). The cover plate (211) includes a first reinforcing portion (2111) and at least two first plates (2112). The first reinforcing portion (2111) is connected between two adjacent first plates (2112) and protrudes from surfaces of the first plates (2112) facing away from the cell (100), and a surface of the first reinforcing portion (2111) facing the cell (100) is concavely provided with a first accommodating groove (21111). The heat exchange assembly (300) is at least partially embedded in the first accommodating groove (21111) and is thermally conductively connected to the cell (100).

## Description

### CROSS-REFERENCE TO RELATED APPLICATIONS

The present application refers to Chinese Patent Application No. 202410137380.7, entitled "BATTERY AND VEHICLE" and filed on January 31, 2024, which is incorporated herein by reference in its entirety.

### TECHNICAL FIELD

The present application relates to the field of electric device technologies, and in particular, to a battery and a vehicle.

### BACKGROUND

Energy conservation and emission reduction is key to the sustainable development of the automobile industry, and electric vehicles are becoming an important part of the sustainable development of the automobile industry due to their advantages in energy conservation and environmental protection. For electric vehicles, battery technology is an important factor to their development.

A battery generally includes a box, a cell, and a heat exchange assembly. The cell and the heat exchange assembly are accommodated in the box. The cell is configured to provide and store electric energy. The heat exchange assembly is in contact with the cell, to absorb heat from the cell or transfer heat to the cell, thereby regulating a temperature of the cell. In the related art, to improve space utilization of an electric vehicle, a cover of a box usually serves as a floor of the electric vehicle, a heat exchange assembly is usually integrated in the cover, and the heat exchange assembly is prone to deformation by an external force, resulting in poor safety performance of a battery.

### SUMMARY

An objective of embodiments of the present application is to provide a battery and a vehicle, to resolve a technical problem in the related art that safety performance of a battery cannot be ensured while improving space utilization of the battery.

To achieve the foregoing objective, the following technical solutions are adopted in the present application:
According to a first aspect, a battery is provided. The battery includes a cell, a box, and a heat exchange assembly. The box is configured to accommodate the cell. The box includes a cover. The cover is configured to serve as at least a part of a floor of a vehicle, and the cover includes a cover plate, where the cover plate includes a first reinforcing portion and at least two first plates. The first reinforcing portion is connected between two adjacent first plates and protrudes from surfaces of the first plates facing away from the cell, and a surface of the first reinforcing portion facing the cell is concavely provided with a first accommodating groove. The heat exchange assembly is at least partially embedded in the first accommodating groove and is thermally conductively connected to the cell.

In the technical solutions of the embodiments of the present application, the cover includes a cover plate. The cover plate includes a first reinforcing portion and at least two first plates. The first reinforcing portion is connected between two first plates. The first reinforcing portion protrudes from surfaces of the first plates facing away from the cell. A surface of the first reinforcing portion facing the cell is concavely provided with a first accommodating groove. At least a part of a structure of the heat exchange assembly is embedded in the first accommodating groove. Through such arrangement, because at least a part of the structure of the heat exchange assembly is embedded in the first accommodating groove, the heat exchange assembly and the cover overlap in a height direction of the battery, and the heat exchange assembly and the cover have high compactness in the height direction of the battery. An overall height of the heat exchange assembly and the cover plate can reach a small value, which is beneficial to improving space utilization of the battery. Based on this, because when the cover serves as at least a part of a floor of the vehicle, the cover plate covers an outer side of the heat exchange assembly, and the cover can protect the heat exchange assembly, and can prevent the heat exchange assembly from being directly stepped on. In addition, the first reinforcing portion can serve as a reinforcing rib to enhance structural strength of the cover, to enable the cover to more effectively protect the heat exchange assembly, thereby reducing a risk of deformation of the heat exchange assembly, improving safety performance of the battery, and balancing space utilization and safety performance.

In some embodiments, the heat exchange assembly includes a plurality of heat exchange tubes, a plurality of first reinforcing portions are provided, the first reinforcing portions and the first plates are alternately arranged, and the plurality of first accommodating grooves respectively accommodate the plurality of heat exchange tubes.

In the technical solution of this embodiment, the plurality of heat exchange tubes can provide a large heat exchange area, thereby improving heat exchange efficiency between the heat exchange assembly and the cell. The plurality of first reinforcing portions can serve as a plurality of reinforcing ribs, and can enhance structural strength of the cover more effectively, so that the cover more effectively protects the heat exchange assembly and improves the safety performance of the battery.

In some embodiments, the heat exchange assembly further includes a manifold, where the manifold communicates with same ends of the at least two heat exchange tubes.

In the technical solutions of the embodiments of the present application, the manifold can implement input and output of a heat exchange medium inside the heat exchange tubes, and can further perform flow distribution on the heat exchange medium, to enable the heat exchange tubes to effectively perform heat exchange with the cell.

In some embodiments, the cover plate further includes a second reinforcing portion, where the second reinforcing portion and the first reinforcing portion are arranged to intersect with each other, and a surface of the second reinforcing portion facing the cell is concavely provided with a second accommodating groove, where the second accommodating groove is configured to accommodate the manifold.

In the technical solutions of the embodiments of the present application, the first reinforcing portion and the second reinforcing portion that are arranged to intersect with each other, which can strengthen the structure of the cover plate from two different directions, to enable the cover plate to more effectively protect the heat exchange assembly, thereby improving safety performance of the battery.

In some embodiments, the first reinforcing portion and the second reinforcing portion are perpendicular to each other. The first reinforcing portion and the second reinforcing portion may strengthen the structure of the cover plate from two mutually perpendicular directions of the cover plate, which helps the cover plate more effectively protect the heat exchange assembly. In addition, the first reinforcing portion and the second reinforcing portion are perpendicular to each other, which can help arrange the heat exchange tubes and the manifold that are perpendicular to each other and is beneficial to arranging more tubes in a limited space, thereby increasing the heat exchange area and improving heat exchange efficiency.

In some embodiments, the cell is connected to the first plate. Through such arrangement, the first plate can directly bear all or part of the gravity of the cell, which can reduce pulling of the heat exchange assembly by the cell, reduce a risk of tensile deformation of the heat exchange assembly, and improve safety performance of the battery. Specifically, if the cell is not indirectly connected to the cover by the heat exchange assembly, all of the gravity of the cell is directly transferred to the first plates, which can prevent the cell from pulling the heat exchange assembly, thereby reducing a risk of deformation of the heat exchange assembly, and improving safety performance of the battery. Moreover, if the cell is indirectly connected to the cover by the heat exchange assembly, part of the gravity of the cell is directly transferred to the first plates, which can prevent the cell from pulling the heat exchange assembly, thereby reducing a risk of deformation of the heat exchange assembly, and improving safety performance of the battery.

In some embodiments, the cell is connected to the heat exchange assembly. Such arrangement facilitates full contact between the heat exchange assembly and the cell, thereby improving heat exchange efficiency between the heat exchange assembly and the cell.

In some embodiments, the heat exchange assembly is connected to the cover. Through such arrangement, the cell is not only directly connected to the cover, but also indirectly connected to the cover by the heat exchange assembly, so that the cell can be more stably installed inside the box. In addition, compared with a case in which the cell is indirectly connected to the cover by only the heat exchange assembly, that is, a case in which the gravity of the cell is completely loaded on the heat exchange assembly, in the technical solutions of the embodiments of the present application, only part of the gravity of the cell is loaded on the heat exchange assembly, leading to a lower probability of deformation of the heat exchange assembly, so that better installation stability of the cell can be achieved while avoiding deformation of the heat exchange assembly as much as possible.

In some embodiments, the cell includes a can and an electrode terminal arranged on a wall of the can, where a side of the can facing away from the electrode terminal is connected to the first plate. Through such arrangement, when the battery is designed, a predetermined space needs to be reserved on only a side of the cell facing away from the cover, so that the predetermined space can serve as both a bottom ball impact space and a high-voltage space of the battery, and can avoid independently arranging a bottom ball impact space and a high-voltage space inside the box, thereby improving space utilization of the battery.

In some embodiments, the cell further includes a vent mechanism, where the vent mechanism is arranged on a side of the can facing away from the cover plate. Through such arrangement, when the battery is designed, a predetermined space needs to be reserved on only a side of the cell facing away from the cover, so that the predetermined space can serve as all of a bottom ball impact space, a high-voltage space, and a vent space of the battery, and can avoid independently arranging a bottom ball impact space, a high-voltage space, and a vent space inside the box, thereby improving space utilization of the battery.

In some embodiments, the battery further includes a mounting beam, where the mounting beam is connected to a surface of the cover plate facing away from the cell, and the mounting beam is configured to connect to a frame of the vehicle.

Compared with connecting to the frame by an edge of the cover, in the technical solutions of the embodiments of the present application, the mounting beam is arranged on a surface of the cover plate facing away from the cell and is connected to the frame by the mounting beam. Therefore, the center of gravity of the battery is closer to a mounting point of the battery, a path through which the gravity of the battery transfers to the frame is shorter, and the moment generated by the gravity of the battery is smaller. In this way, the thickness of the cover can be designed to be smaller, which is beneficial to the lightweight design of the battery. In addition, the mounting beam is fixed to the surface of the cover plate facing away from the cell, and may serve as a reinforcing rib of the cover plate, to enhance the structural strength of the cover plate, to enable the cover plate to effectively protect the heat exchange assembly, thereby improving safety performance of the battery.

In some embodiments, the battery further includes a seat beam, where the seat beam is connected to the cover plate.

In the technical solutions of the embodiments of the present application, the seat beam is fixed to the surface of the cover plate facing away from the cell, and may serve as a reinforcing rib of the cover plate, to enhance the structural strength of the cover plate, to enable the cover plate to effectively protect the heat exchange assembly, thereby improving safety performance of the battery.

In some embodiments, the seat beam is configured to connect to the frame of the vehicle.

In the technical solutions of the embodiments of the present application, the seat beam can directly transfer the weight of occupants of the vehicle to the frame. In this way, the pressure on the cover plate can be reduced, and the pressure transferred from the cover plate to the heat exchange assembly can be reduced, thereby reducing a risk of deformation of the heat exchange assembly and improving safety performance of the battery.

In some embodiments, the cell further includes a first expansion beam and a second expansion beam, where the first expansion beam and the second expansion beam are connected to a side of the cover plate facing the cell, and the cell is arranged between the first expansion beam and the second expansion beam.

In the technical solutions of the embodiments of the present application, the first expansion beam and the second expansion beam can resist the expansion force of the cell, thereby improving safety performance of the battery. In addition, the first expansion beam and the second expansion beam are fixedly connected to the cover, which can enhance the structural strength of the cover, so that the cover protects the heat exchange assembly and the cell more effectively, thereby further improving safety performance of the battery.

In some embodiments, a plurality of cells are provided, and the battery further includes a heat spreader, where the heat spreader is arranged between the plurality of cells and the heat exchange assembly.

In the technical solutions of the embodiments of the present application, heat generated by the plurality of cells can be evenly dispersed by the heat spreader, to avoid generation of a hot spot inside the battery as much as possible. The presence of the heat spreader can further provide a larger heat conduction area and a better heat dissipation path, increase a heat transfer speed, and improve heat exchange efficiency between the heat exchange assembly and the cell.

In some embodiments, the cell further includes a bottom guard, where the bottom guard and the cover enclose an accommodating cavity capable of accommodating the heat exchange assembly and the cell, to protect the cell and the heat exchange assembly, to prevent the cell and the heat exchange assembly from external impact as much as possible.

In some embodiments, the cover is a steel cover. The steel cover has high structural strength, and can absorb and disperse an external acting force effectively, thereby reducing pressure on the heat exchange assembly, reducing a risk of deformation of the heat exchange assembly, and improving safety performance of the battery.

In some embodiments, the heat exchange assembly is an aluminum heat exchanger. The aluminum heat exchanger is easy to process and form, has good thermal conductivity, and is lightweight, so that processing costs of the heat exchange assembly can be reduced, heat exchange efficiency can be improved, and the lightweight design of the battery can be facilitated.

According to a second aspect, a vehicle is provided. The vehicle includes the battery according to the first aspect.

In the technical solutions of the embodiments of the present application, the vehicle includes the battery according to the embodiment in the first aspect, so that the vehicle also has the technical effects corresponding to the foregoing battery. Details are not described herein again.

The foregoing descriptions are merely an overview of the technical solutions of the present application. To understand the technical means of the present application more clearly, implementation can be performed according to content of the specification. Moreover, to make the foregoing and other objectives, features, and advantages of the present application more comprehensible, specific embodiments of the present application are particularly described below.

### BRIEF DESCRIPTION OF THE DRAWINGS

To describe the technical solutions in some embodiments of the present application more clearly, the following outlines the drawings to be used in some embodiments or exemplary technical description. Evidently, the drawings outlined below are merely some embodiments of the present application. A person of ordinary skill in the art may derive other drawings from such drawings without making any creative efforts.
FIG. 1 is a schematic structural diagram of a vehicle according to some embodiments of the present application;
FIG. 2 is a schematic structural exploded view of a battery according to some embodiments of the present application;
FIG. 3 is a schematic structural diagram of a cover, a mounting beam, a first fastener, and a seat beam of a battery according to some embodiments of the present application;
FIG. 4 is a schematic structural diagram of a cover of a battery according to some embodiments of the present application;
FIG. 5 is a schematic structural diagram of a heat exchange assembly of a battery according to some embodiments of the present application;
FIG. 6 is a schematic structural top view of a battery according to some embodiments of the present application;
FIG. 7 is a cross-sectional view of a battery along a direction of a line A-A according to some embodiments of the present application;
FIG. 8 is an enlarged view of the battery shown in FIG. 7 at a position C;
FIG. 9 is a cross-sectional view of a battery along a direction of a line B-B according to some embodiments of the present application;
FIG. 10 is an enlarged view of the battery shown in FIG. 9 at a position D;
FIG. 11 is a schematic structural exploded view of a cover, a heat exchange assembly, a first expansion beam, and a second expansion beam of a battery according to some embodiments of the present application; and
FIG. 12 is a schematic structural exploded view of a cover, a heat exchange assembly, a heat spreader, a first expansion beam, and a second expansion beam of a battery according to some embodiments of the present application.

### Reference numerals in the accompanying drawings:

1. vehicle;
10. battery; 100. cell; 200. box; 210. cover; 211. cover plate; 2111. first reinforcing portion; 21111. first accommodating groove; 2112. first plate; 2113. second reinforcing portion; 21131. second accommodating groove; 2114. second plate; 212. cover side wall; 220. bottom guard; 221. guard bottom wall; 222. guard side wall; 300. heat exchange assembly; 310. heat exchange tube; 320. manifold; 321. liquid inlet; 322. liquid outlet; 400. mounting beam; 410. first fastener; 500. seat beam; 510. second through hole; 600. first expansion beam; 601. installation groove; 610. third fastener; 700. second expansion beam; 800. heat spreader;
20. frame;
30. controller;
40. motor.

### DETAILED DESCRIPTION

Embodiments of the present application are described below in detail, and examples of embodiments are shown in accompanying drawings, where the same or similar elements or the elements having same or similar functions are denoted by the same or similar reference numerals throughout the description. Embodiments described below with reference to the accompanying drawings are exemplary and used merely for explaining the present application, and should not be construed as a limitation on the present application.

Understandably, in the description of the present application, a direction or positional relationship indicated by the terms such as "length", "width", "up", "down", "front", "back", "left", "right", "vertical", "horizontal", "top", "bottom", "in", and "out" is a direction or positional relationship based on the illustration in the drawings, and is merely intended for ease or brevity of description of the present application, but does not necessarily mean or imply that the indicated device or component is located in the specified direction or constructed or operated in the specified direction. Therefore, such terms are not to be understood as a limitation on the present application.

In addition, the terms "first" and "second" are used for descriptive purposes only and are not to be construed as indicating or implying relative importance or implicitly indicating a quantity of technical features indicated. Therefore, a feature defined by "first" or "second" may explicitly indicate or implicitly include one or more features. In the description of the present application, "a plurality of" means two or more, unless otherwise definitely and specifically limited.

Referring to "one embodiment" or "an embodiment" throughout the specification means that particular features, structures, or characteristics described with reference to the embodiments are included in at least one embodiment of the present application. Therefore, the phrase "in an embodiment" or "in some embodiments" appears throughout the specification, and does not refer to a same embodiment. In addition, in one or more embodiments, particular features, structures, or characteristics may be combined in any appropriate manner.

As a power source of a vehicle, a battery is one of the most important components of the vehicle. Safety performance of a battery has crucial impact on a vehicle, and is an important indicator for evaluating battery performance. In addition, the space utilization of the battery has significant impact on the range of the battery, and is also an important indicator for evaluating the performance of the battery. Therefore, to ensure the performance and safety of the vehicle, indicators, such as the safety performance and the space utilization, of the battery need to be comprehensively considered to optimize the design of the battery.

A battery generally includes a box, a cell, and a heat exchange assembly. The box is configured to accommodate the cell and the heat exchange assembly. The heat exchange assembly is in contact with the cell, to absorb heat from the cell or transfer heat to the cell, thereby regulating a temperature of the cell. In the related art, to improve overall space utilization of a vehicle, a cover of a box is usually used as a floor of the vehicle. In this way, a gap between a cover of a battery and the floor of the vehicle can be omitted, and the assembly space for installing the battery is increased in a height direction of the vehicle.

In the related art, to improve space utilization of a battery itself, there is also a case in which a heat exchange assembly is integrated into a cover, that is, a heat exchange flow channel is directly formed on the cover. However, when the cover serves as a floor of a vehicle, the heat exchange flow channel is integrated into the cover, and the heat exchange flow channel needs to directly bear stepping forces of occupants. In addition, because the structural strength of the cover into which the heat exchange flow channel is integrated is usually low, the heat exchange flow channel is prone to deformation or cracking under stepping forces of occupants, resulting in degraded safety performance of the battery during improvement of space utilization of the battery.

To improve space utilization of a battery while ensuring safety performance of the battery, the present application provides a battery. The battery includes a cell, a box, and a heat exchange assembly, configured to accommodate the cell. The box includes a cover. The cover includes a cover plate, configured to serve as at least a part of a floor of a vehicle, where the cover plate includes a first reinforcing portion and at least two first plates. The first reinforcing portion is connected between two adjacent first plates. The first reinforcing portion protrudes from surfaces of the first plates facing away from the cell. A surface of the first reinforcing portion facing the cell is concavely provided with a first accommodating groove. The heat exchange assembly is at least partially embedded in the first accommodating groove of the first reinforcing portion. Because the heat exchange assembly is at least partially embedded in the first accommodating groove, the cover and the heat exchange assembly overlap in a height direction of the battery, and compactness of the cover and the heat exchange assembly in the height direction of the battery is high, so that the height of the heat exchange assembly and the cover can be kept at a small value, thereby enabling the battery to have high space utilization. Based on this, the first reinforcing portion can enhance structural strength of the cover, to enable the cover to effectively protect the heat exchange assembly, thereby reducing a risk of deformation of the heat exchange assembly, to enable the battery to balance space utilization and safety performance.

The technical solutions described by the embodiments of the present application are all applicable to vehicles, for example, fuel vehicles, gas vehicles, or new energy vehicles, where the new energy vehicles may be pure electric vehicles, hybrid electric vehicles, range-extended electric vehicles, or the like. The technical solutions described in the embodiments of the present application are also applicable to other electric devices using batteries, for example, mobile phones, portable devices, notebook computers, ships, spacecrafts, electric toys, and electric tools. The spacecrafts include airplanes, rockets, space shuttles, spaceships, and the like. The electric toys include fixed or mobile electric toys and the like. The electric tools include electric metal cutting tools, electric grinding tools, electric assembling tools, electric tools for use in railways, and the like.

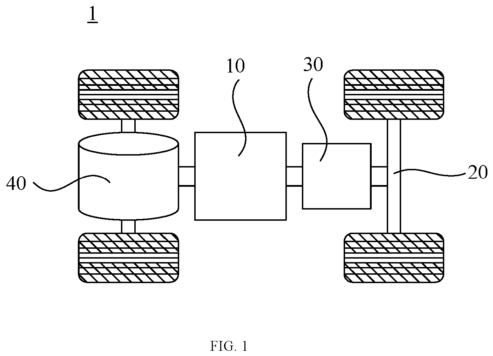

Referring to FIG. 1, FIG. 1 is a schematic structural diagram of a vehicle 1 according to an embodiment of the present application. The vehicle 1 may be a fuel vehicle, a gas vehicle, or a new energy vehicle. The new energy vehicle may be a pure electric vehicle, a hybrid electric vehicle, an extended-range vehicle, or the like. A battery 10 is arranged inside the vehicle 1, and the battery 10 may be arranged at the bottom, the head, or the tail of the vehicle 1. In addition, the battery 10 may be installed on the vehicle 1 and a frame 20. The battery 10 may be configured to supply power to the vehicle 1. For example, the battery 10 may serve as an operating power supply of the vehicle 1. The vehicle 1 may further include a controller 30 and a motor 40, and the controller 30 is configured to control the battery 10 to supply power to the motor 40, for example, for operating power demands during starting, navigation, and traveling of the vehicle 1.

In some embodiments of the present application, the battery 10 not only serves as an operating power supply of the vehicle 1, but also may serve as a driving power supply of the vehicle 1 to provide driving power for the vehicle 1 in place of or partially in place of fuel or natural gas.

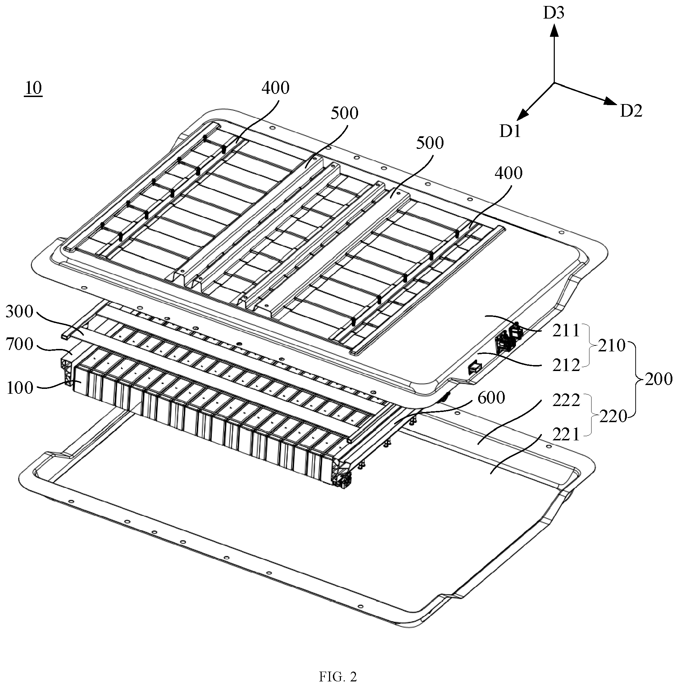

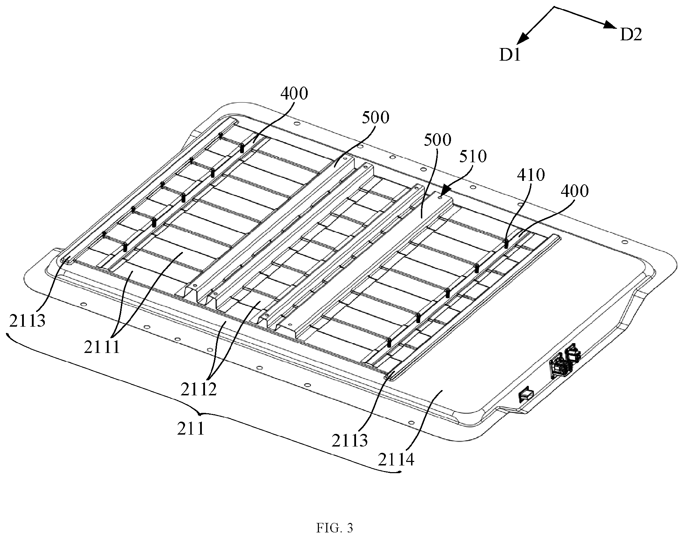

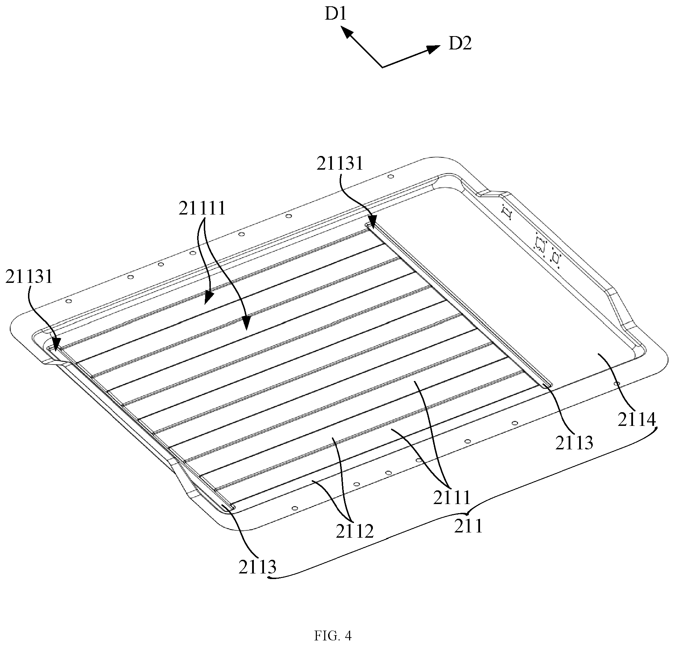

Referring to FIG. 2, a battery 10 provided in an embodiment of the present application includes a cell 100, a box 200, and a heat exchange assembly 300. The box 200 is configured to accommodate the cell 100. The box 200 includes a cover 210. The cover 210 is configured to serve as at least a part of a floor of a vehicle 1, and the cover 210 includes a cover plate 211. Referring to FIG. 3, the cover plate 211 includes a first reinforcing portion 2111 and at least two first plates 2112. The first reinforcing portion 2111 is connected between two adjacent first plates 2112 and protrudes from surfaces of the first plates 2112 facing away from the cell 100. Referring to FIG. 4, a surface of the first reinforcing portion 2111 facing the cell 100 is concavely provided with a first accommodating groove 21111. Referring to FIG. 1 and FIG. 4, the heat exchange assembly 300 is at least partially embedded in the first accommodating groove 21111 and is thermally conductively connected to the cell 100.

Referring to FIG. 2, the cover 210 is configured to serve as at least a part of the floor of the vehicle 1, which may be understood as that the cover 210 is directly used as the floor of the vehicle 1, or the cover 210 is configured to serve as a part of the floor of the vehicle 1. That is, the floor of the vehicle 1 includes the cover 210 and another plate structure, and the cover 210 and the another plate structure jointly form the floor of the vehicle 1. Since the cover 210 serves as at least a part of the floor of the vehicle 1, a gap between the cover 210 and the floor is omitted, which helps improve integration of the vehicle 1. When the cover 210 serves as at least a part of a floor of the vehicle 1, the cell 100 and the heat exchange assembly 300 are both located on a side of the cover 210 facing away from a cabin of the vehicle 1. In other words, a surface of the cover 210 facing away from the cell 100 and the heat exchange assembly 300 is arranged to face the cabin of the vehicle 1.

Referring to FIG. 2, in some implementations, the cover 210 may include a cover plate 211 and a cover side wall 212. The cover side wall 212 is connected to an outer edge of the cover plate 211. The cover side wall 212 and the cover plate 211 enclose an accommodating cavity having an opening. At least a part of a structure of the cell 100 is accommodated in the accommodating cavity. Certainly, in another implementation, the cover 210 may alternatively include only the cover plate 211, and a structure of the cover 210 may be set according to requirements. The material of the cover 210 may be, but not limited to, steel, aluminum alloy, or the like. The material of the cover 210 may be set according to requirements.

Referring to FIG. 3 and FIG. 4, the cover plate 211 may include one or more first reinforcing portions 2111, and include two or more first plates 2112. A quantity of first plates 2112 is at least one greater than a quantity of first reinforcing portions 2111. When one first reinforcing portion 2111 is provided, two first plates 2112 are correspondingly provided, and the first reinforcing portion 2111 is connected between the two first plates 2112. When a plurality of first reinforcing portions 2111 are provided, a plurality of first plates 2112 are correspondingly provided, and the plurality of first reinforcing portions 2111 and the plurality of first plates 2112 may be sequentially alternately connected. The first reinforcing portion 2111 and the first plates 2112 may be integrally formed, and the first reinforcing portion 2111 and the first plates 2112 may be separately formed and then connected to each other. The first reinforcing portion 2111 may extend along a straight line. For example, the first reinforcing portion 2111 may extend along a length direction or a width direction of the cover plate 211. The length direction of the cover plate 211 is a first direction D1 shown in FIG. 3 and FIG. 4, and the width direction of the cover plate 211 is a second direction D2 shown in FIG. 3 and FIG. 4. Alternatively, the first reinforcing portion 2111 may extend along a direction that forms angles with the length direction and the width direction of the cover plate 211. The first reinforcing portion 2111 may further extend along a curve. For example, the first reinforcing portion 2111 may be in a shape such as a serpentine shape. A shape of an outer contour of a cross section of the first reinforcing portion 2111 may be a semi-circle, a semi-ellipse, a rectangle, a trapezoid, or the like. The first accommodating groove 21111 may be arranged to extend along an extending direction of the first reinforcing portion 2111. A shape of a cross section of the first accommodating groove 21111 may be a semi-circle, a semi-ellipse, a rectangle, a trapezoid, or the like. The quantity of the first reinforcing portions 2111, the quantity of the first plates 2112, the extending direction of the first reinforcing portion 2111, the shape of the cross section of the first reinforcing portion 2111, the shape of the cross section of the first accommodating groove 21111, and the like are not specifically limited in the present application.

Referring to FIG. 2, one or more cells 100 may be provided. When a plurality of cells 100 are provided, the plurality of cells 100 may be connected to one another in series, parallel, or series-parallel. The series-parallel connection refers that some of the plurality of battery cells 100 are connected in series, and the rest are connected in parallel. The plurality of cells 100 may be directly connected in series, parallel, or series-parallel, and then a whole formed by the plurality of cells 100 is accommodated in the box body 200. Certainly, the battery 10 may be a whole formed by connecting the plurality of cells 100 in series, parallel, or parallel-series first for combination into a battery module, and then, connecting a plurality of battery modules in series, parallel, or parallel-series, and is accommodated in the box body 200. The battery 10 may further include other structures, for example, the battery 10 may further include a busbar component for achieving electrical connection between a plurality of cells 100.

The cell 100 may be a secondary battery or a primary cell. A secondary battery refers to a cell 100 that can be charged to activate an active material and continue to be used after the cell 100 is discharged. A primary battery refers to a cell 100 that cannot be charged to activate an active material and continue to be used after the cell 100 is depleted. The cell 100 may also be a lithium-ion battery, a sodium-ion battery, a sodium lithium-ion battery, a lithium metal battery, a sodium metal battery, a lithium-sulfur battery, a magnesium-ion battery, a nickel-hydrogen battery, a nickel-cadmium battery, a lead storage battery, or the like, but is not limited thereto. The cell 100 may be a cylindrical cell, a prismatic cell, or a cell in another shape. The prismatic cell includes a square-can cell, a blade-shaped cell, or a polygonal prismatic cell. The polygonal prismatic cell is, for example, a hexagonal prismatic cell. This is not specifically limited in the present application.

The heat exchange assembly 300 is a component configured to regulate a temperature of the cell 100. It may be understood that, the heat exchange assembly 300 is in contact with the cell 100, to absorb heat of the cell 100 or transfer heat to the cell 100, thereby regulating the temperature of the cell 100. The heat exchange assembly 300 may be configured in a plurality of different shapes. For example, the heat exchange assembly 300 may be configured as a serpentine tube. In another example, the heat exchange assembly 300 may include two manifolds 320 spaced apart and a plurality of heat exchange tubes 310 connected between the two manifolds 320.

That the heat exchange assembly 300 is at least partially embedded in the first accommodating groove 21111 may be understood as that, all tube segments of the heat exchange assembly 300 are embedded in the first accommodating groove 21111, or some tube segments of the heat exchange assembly 300 are embedded in the first accommodating groove 21111, and the remaining tube segments are not embedded in the first accommodating groove 21111. In addition, tube segments that are in the heat exchange assembly 300 and that are embedded in the first accommodating groove 21111 may not protrude from a groove opening of the first accommodating groove 21111, or may protrude from a groove opening of the first accommodating groove 21111. Tube segments that are in the heat exchange assembly 300 and that are not embedded in the first accommodating groove 21111 may be arranged on a side of the first plate 2112 facing the cell 100 or may be arranged at positions on the cover plate 211 other than the first reinforcing portion 2111 and the first plate 2112. For example, when the cover plate 211 further includes a second reinforcing portion 2113, the tube segments may also be arranged in a second accommodating groove 21131 provided on the second reinforcing portion 2113.

The heat exchange assembly 300 and the cell 100 may be fixed in the box 200 in a plurality of manners. Referring to FIG. 2 and FIG. 3, in some implementations, the cell 100 may be fixed on a surface of the first plate 2112 facing the cell 100. The heat exchange assembly 300 may be fixedly connected to the cell 100 instead of being fixedly connected to the cover 210. Such design prevents the heat exchange assembly 300 from being pulled by the cell 100, that is, the gravity of the cell 100 is not transferred to the heat exchange assembly 300, which can reduce a risk of deformation of the heat exchange assembly 300. In addition, the heat exchange assembly 300 is fixedly connected to the cell 100, so that heat exchange efficiency between the heat exchange assembly 300 and the cell 100 is high.

Referring to FIG. 2 and FIG. 3, in some implementations, the cell 100 may be fixed on a surface of the first plate 2112 facing the cell 100. The heat exchange assembly 300 may be fixedly connected to the cover 210 instead of being fixedly connected to the cell 100. Such design enables the heat exchange assembly 300 to be stably fixed between the cell 100 and the cover 210, and prevents the gravity of the cell 100 from being transferred to the heat exchange assembly 300 and the heat exchange assembly 300 from being pulled by the cell 100, which can reduce a risk of deformation of the heat exchange assembly 300.

Referring to FIG. 2 and FIG. 3, in some implementations, the cell 100 may be fixed on a surface of the first plate 2112 facing the cell 100, and the heat exchange assembly 300 may be fixedly connected to both the cover 210 and the cell 100. Such design enables the cell 100 to be directly connected to the cover 210, and also indirectly connected to the cover 210 by the heat exchange assembly 300, so that installation stability of the cell 100 can be improved, and heat exchange efficiency between the heat exchange assembly 300 and the cell 100 is also high. In addition, the heat exchange assembly 300 and the cell 100 under the cover 210 may form a solid structure, so that when stepping on the cover 210, a user does not have a feeling of stepping on empty or instability.

Certainly, in another implementation, the cell 100 may alternatively not be directly connected to the cover 210, but be indirectly connected to the cover 210 by the heat exchange assembly 300, or be fixed into the box 200 by another snap-fit structure. The cell 100 and the heat exchange assembly 300 may be fixed into the box 200 by selecting an appropriate manner according to requirements. This is not specifically limited in the present application.

It should be noted that in the foregoing implementation, the heat exchange assembly 300 may be connected to the cover 210 in a connection manner such as bonding, welding, or screwing. The heat exchange assembly 300 may be connected to the cell 100 in a connection manner such as bonding or screwing. The cell 100 may also be connected to the cover 210 in a connection manner such as bonding or screwing. This is not specifically limited in the present application.

In the technical solutions of the embodiments of the present application, the cover 210 includes a cover plate 211. The cover plate 211 includes a first reinforcing portion 2111 and at least two first plates 2112. The first reinforcing portion 2111 is connected between two first plates 2112. The first reinforcing portion 2111 protrudes from surfaces of the first plates 2112 facing away from the cell 100. A surface of the first reinforcing portion 2111 facing the cell 100 is concavely provided with a first accommodating groove 21111. At least a part of a structure of the heat exchange assembly 300 is embedded in the first accommodating groove 21111. In this way, because at least a part of the structure of the heat exchange assembly 300 is embedded in the first accommodating groove 21111, the heat exchange assembly 300 and the cover 210 overlap in a height direction of the battery 10, and the heat exchange assembly 300 and the cover 210 have high compactness in the height direction of the battery 10. An overall height of the heat exchange assembly 300 and the cover plate 211 can reach a small value, which is beneficial to improving space utilization of the battery 10. The height direction of the batter 10 is a third direction D3 in FIG. 2. In addition, because when the cover 210 serves as at least a part of a floor of the vehicle 1, the cover plate 211 covers an outer side of the heat exchange assembly 300, and the cover 210 can protect the heat exchange assembly 300, and can prevent the heat exchange assembly 300 from being directly stepped on. Further, the first reinforcing portion 2111 can serve as a reinforcing rib to enhance structural strength of the cover 210, to enable the cover 210 to more effectively protect the heat exchange assembly 300, thereby reducing a risk of deformation of the heat exchange assembly 300, improving safety performance of the battery 10, and balancing space utilization and safety performance of the battery 10.

In addition, in the technical solutions of the embodiments of the present application, the heat exchange assembly 300 is embedded in the first accommodating groove 21111 of the first reinforcing portion 2111, instead of directly providing a heat exchange flow channel inside the cover 210, so that the cover 210 has a simpler structure and a lower requirement on heat conduction performance. In this way, when the cover 210 is processed, a processing process and a material of the cover 210 can be selected more freely, to help the cover 210 be fixedly connected to a structure, such as the frame 20 and a seat, of the vehicle 1, so that compatibility and modularity of the battery 10 are improved.

Referring to FIG. 3 to FIG. 5, in some embodiments, the heat exchange assembly 300 includes a plurality of heat exchange tubes 310, a plurality of first reinforcing portions 2111 are provided, the first reinforcing portions 2111 and the first plates 2112 are alternately arranged, and the plurality of first accommodating grooves 21111 respectively accommodate the plurality of heat exchange tubes 310.

In the technical solution of this embodiment, the plurality of heat exchange tubes 310 can provide a large heat exchange area, thereby improving heat exchange efficiency between the heat exchange assembly 300 and the cell 100. The plurality of first reinforcing portions 2111 can serve as a plurality of reinforcing ribs, and can enhance structural strength of the cover 210 more effectively, so that the cover 210 more effectively protects the heat exchange assembly 300 and improves the safety performance of the battery 10.

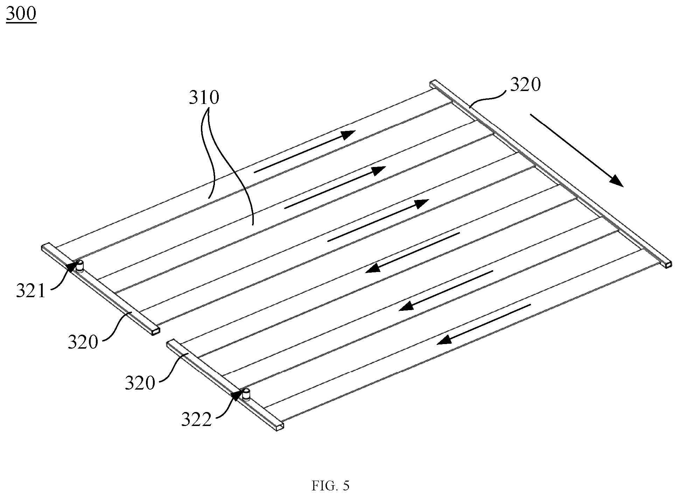

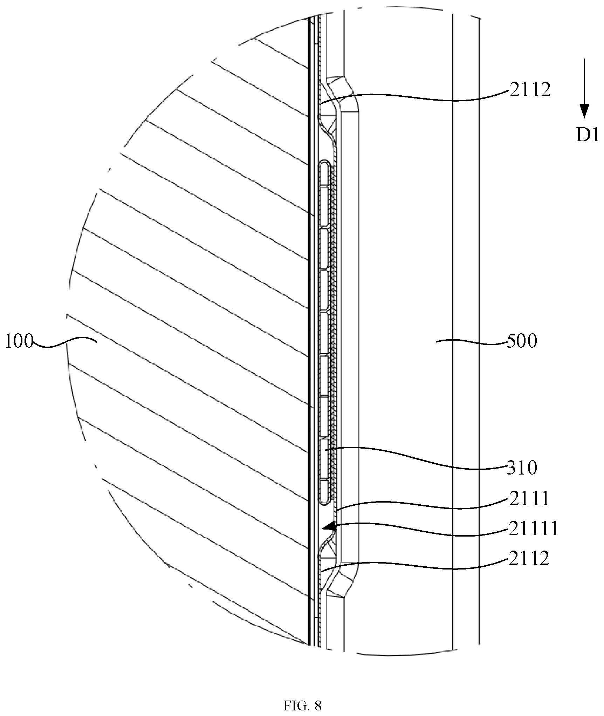

For example, referring to FIG. 3 and FIG. 4, the plurality of first reinforcing portions 2111 and the plurality of first plates 2112 are sequentially arranged at intervals along a width direction of the cover 210, and the first reinforcing portions 2111 and the first plates 2112 extend along a length direction of the cover 210. Referring to FIG. 5, the heat exchange assembly 300 includes a plurality of heat exchange tubes 310 that are arranged in parallel and at intervals. The plurality of heat exchange tubes 310 are respectively embedded in first accommodating grooves 21111 of the plurality of first reinforcing portions 2111. Referring to FIG. 2, a plurality of cells 100 are provided. The plurality of cells 100 are arranged in an array along a width direction of the cover 210 and a length direction of the cover 210. Heat exchange tubes 310 simultaneously come into contact with a row of cells 100 that are sequentially arranged along a length direction of the cover 210 for heat exchange. In addition, referring to FIG. 8, a dimension of the heat exchange tube 310 in the width direction of the cover 210 is smaller than a dimension of the cell 100 in the width direction of the cover 210. Such design prevents the heat exchange tubes 310 from completely covering a surface of the cell 100 that facing the cover 210, and a region that is on the surface of the cell 100 facing the cover 210 and that is not covered by the heat exchange tubes 310 may be fixedly connected to the first plates 2112 in a manner such as bonding. In this way, each cell 100 not only can be in direct contact with the heat exchange tubes 310, to achieve a good heat exchange effect, but also can be directly mounted on the first plates 2112, to reduce or avoid pulling of the heat exchange assembly 300 by the cell 100, reduce a risk of deformation of the heat exchange assembly 300, and improve safety performance of the battery 10.

Referring to FIG. 5, in some embodiments, the heat exchange assembly 300 further includes a manifold 320, where the manifold 320 communicates with same ends of the at least two heat exchange tubes 310.

In some implementations, the heat exchange assembly 300 includes two manifolds 320. The two manifolds 320 are respectively provided with a liquid inlet 321 and a liquid outlet 322. The manifold 320 provided with the liquid inlet 321, as a liquid inlet manifold, communicates with same ends of the plurality of heat exchange tubes 310. The manifold 320 provided with the liquid outlet 322, as a liquid outlet manifold, communicates with the other ends of the plurality of heat exchange tubes 310. A heat exchange medium may enter the liquid inlet manifold from the liquid inlet 321, and then is diverted from the liquid inlet manifold to the plurality of heat exchange tubes 310. The heat exchange medium in the plurality of heat exchange tubes 310 finally converges into the liquid outlet manifold, and flows out from the liquid outlet 322 of the liquid outlet manifold.

In some implementations, referring to FIG. 5, the heat exchange assembly 300 includes three manifolds 320. Two manifolds 320 in the three manifolds 320 are respectively provided with a liquid inlet 321 and a liquid outlet 322. The manifold 320 provided with the liquid inlet 321, as a liquid inlet manifold, communicates with first ends of some heat exchange tubes 310 in the plurality of heat exchange tubes 310. The manifold 320 provided with the liquid outlet 322, as a liquid outlet manifold, communicates with first ends of the remaining heat exchange tubes 310 in the plurality of heat exchange tubes 310. The manifold 320 neither provided with the liquid inlet 321 nor provided with the liquid outlet 322, as an intermediate manifold, communicates with second ends of the plurality of heat exchange tubes 310. A heat exchange medium may enter the liquid inlet manifold from the liquid inlet 321, and then is diverted from the liquid inlet manifold to the heat exchange tubes 310 connected to the liquid inlet manifold. The heat exchange medium in the heat exchange tubes 310 connected to the liquid inlet manifold finally converges into the intermediate manifold, and is diverted from the intermediate manifold to the heat exchange tubes 310 connected to the liquid outlet manifold. The heat exchange medium finally converges into the liquid outlet manifold from the heat exchange tubes 310 connected to the liquid outlet manifold, and flows out from the liquid outlet 322 of the liquid outlet manifold.

In some other implementations, four or more manifolds 320 may alternatively be provided. A quantity of manifolds 320 and a connection manner between the manifolds 320 and the heat exchange tubes 310 may be set according to requirements.

In the technical solutions of the embodiments of the present application, the manifold 320 can implement input and output of a heat exchange medium inside the heat exchange tubes 310, and can further perform flow distribution on the heat exchange medium, to enable the heat exchange tubes 310 to effectively perform heat exchange with the cell 100.

Referring to FIG. 3 and FIG. 4, in some embodiments, the cover plate 211 further includes a second reinforcing portion 2113, where the second reinforcing portion 2113 and the first reinforcing portion 2111 are arranged to intersect with each other, and a surface of the second reinforcing portion 2113 facing the cell 100 is concavely provided with a second accommodating groove 21131, where the second accommodating groove 21131 is configured to accommodate the manifold 320.

It may be understood that, two or more second reinforcing portions 2113 may be provided. The second reinforcing portions 2113 are connected to at least ends of two first reinforcing portions 2111. In this way, the second accommodating groove 21131 on the second reinforcing portion 2113 can communicate with at least two first accommodating grooves 21111, so that the manifold 320 in the second accommodating groove 21131 can communicate with ends of at least two heat exchange tubes 310. An angle between the second reinforcing portion 2113 and the first reinforcing portion 2111 that are arranged to intersect with each other may be 75° to 115°, for example, 85° or 105°.

Referring to FIG. 3 and FIG. 4, in some implementations, the cover plate 211 includes two second reinforcing portions 2113. One of the two second reinforcing portions 2113 is connected to same ends of all the first reinforcing portions 2111 and all the first plates 2112, and the other of the two second reinforcing portions 2113 is connected to the other ends of all the first reinforcing portions 2111 and all the first plates 2112. Each of the two second reinforcing portions 2113 is provided with a second accommodating groove 21131. One second accommodating groove 21131 in the two second accommodating grooves 21131 communicates with same ends of all the first accommodating grooves 21111, and the other second accommodating groove 21131 in the two second accommodating grooves 21131 communicates with the other ends of all the first accommodating grooves 21111. Such arrangement can facilitate communication between the manifold 320 arranged in the second accommodating groove 21131 and ends of the heat exchange tubes 310 arranged in the first accommodating groove 21111, thereby implementing diversion or convergence of a heat exchange medium, and further enhancing structural strength of the cover 210 from two different directions.

In the technical solutions of the embodiments of the present application, the first reinforcing portion 2111 and the second reinforcing portion 2113 that are arranged to intersect with each other, which can strengthen the structure of the cover plate 211 from two different directions, to enable the cover plate 211 to more effectively protect the cover plate 211, thereby improving safety performance of the battery 10.

Referring to FIG. 3 and FIG. 4, in some embodiments, the first reinforcing portion 2111 and the second reinforcing portion 2113 are perpendicular to each other.

Referring to FIG. 3 and FIG. 4, in some implementations, the first reinforcing portion 2111 extends along a length direction of the cover 210, and the second reinforcing portion 2113 extends along a width direction of the cover 210. In some other implementations, the first reinforcing portion 2111 extends along a width direction of the cover 210, and the second reinforcing portion 2113 extends along a length direction of the cover 210.

In the technical solutions of the embodiments of the present application, the first reinforcing portion 2111 and the second reinforcing portion 2113 may strengthen the structure of the cover plate 211 from two mutually perpendicular directions of the cover plate 211, which helps the cover plate 211 more effectively protect the heat exchange assembly 300. In addition, the first reinforcing portion 2111 and the second reinforcing portion 2113 are perpendicular to each other, which can help arrange the heat exchange tubes 310 and the manifold 320 that are perpendicular to each other and is beneficial to arranging more tubes in a limited space, thereby increasing the heat exchange area and improving heat exchange efficiency.

In some embodiments, the cell 100 is connected to the first plates 2112. Specifically, the cell 100 and the first plates 2112 may be fixedly connected in a connection manner such as bonding, welding, or screwing.

In the technical solutions of the embodiments of the present application, the cell 100 is arranged to directly connect to the first plates 2112, and the first plates 2112 can directly bear all or part of the gravity of the cell 100, which can reduce pulling of the heat exchange assembly 300 by the cell 100, and reduce a risk of tensile deformation the heat exchange assembly 300. Specifically, if the cell 100 is indirectly connected to the cover 210 by the heat exchange assembly 300, all of the gravity of the cell 100 is directly transferred to the first plates 2112, which can prevent the cell 100 from pulling the heat exchange assembly 300, thereby reducing a risk of deformation of the heat exchange assembly 300, and improving safety performance of the battery 10. Moreover, if the cell 100 is indirectly connected to the cover 210 by the heat exchange assembly 300, part of the gravity of the cell 100 is directly transferred to the first plates 2112, which can prevent the cell 100 from pulling the heat exchange assembly 300, thereby reducing a risk of deformation of the heat exchange assembly 300, and improving safety performance of the battery 10.

In some embodiments, the cell 100 is connected to the heat exchange assembly 300. Specifically, the cell 100 and the heat exchange assembly 300 may be fixedly connected in a connection manner such as bonding, welding, or screwing. Such design facilitates full contact between the heat exchange assembly 300 and the cell 100, thereby improving heat exchange efficiency between the heat exchange assembly and the cell.

In some embodiments, the heat exchange assembly 300 is connected to the cover 210. Specifically, the heat exchange assembly 300 may be fixedly connected to the cover 210 in a connection manner such as bonding, screwing, or welding, which may be set according to a requirement.

In the technical solutions of the embodiments of the present application, the cell 100 not only is directly connected to the cover 210, and also indirectly connected to the cover 210 by the heat exchange assembly 300, so that installation stability of the cell 100 is good. In addition, compared with a case in which the cell 100 is indirectly connected to the cover 210 by only the heat exchange assembly 300, that is, a case in which the gravity of the cell 100 is completely loaded on the heat exchange assembly 300, in the technical solutions of the embodiments of the present application, only part of the gravity of the cell 100 is loaded on the heat exchange assembly 300, leading to a lower probability of deformation of the heat exchange assembly 300, so that better installation stability of the cell 100 can be achieved while avoiding deformation or cracking of the heat exchange assembly 300 as much as possible.

In some embodiments, the heat exchange assembly 300 and a groove wall of the first accommodating groove 21111 are bonded to each other. Such design can enable the heat exchange assembly 300 to be stably connected to the cover 210, and can enable parts of the heat exchange assembly 300 to bear uniform forces, which helps reduce a risk of deformation or cracking of the heat exchange assembly 300. In addition, such design enables the interior of the first accommodating groove 21111 to be filled, to form a solid structure, and when the heat exchange assembly 300 and the cell 100 are also bonded to each other, a feeling of instability or stepping on empty generated when a user steps on the cover 210 can be avoided as much as possible.

In some embodiments, the cell 100 includes a can and an electrode terminal arranged on a wall of the can, where a side of the can facing away from the electrode terminal is connected to the first plate 2112.

It may be understood that the can refers to a shell structure having an inner space. The inner space of the can is configured to accommodate an electrode assembly that can provide and store electric energy, and the electrode assembly has a positive electrode tab and a negative electrode tab. The electrode terminal refers to a conductive member arranged on the can, and the electrode terminal is connected to a tab of the electrode assembly, to output electric energy of the cell 100 or charge the cell 100. The cell 100 generally has two electrode terminals. The two electrode terminals are respectively connected to the positive electrode tab and the negative electrode tab of the electrode assembly. An electrode terminal connected to the positive electrode tab is a positive electrode terminal, and an electrode terminal connected to the negative electrode tab is a negative electrode terminal. In this embodiment, a positive terminal and a negative terminal of the cell 100 are both arranged on a side of the can facing away from the cover 210.

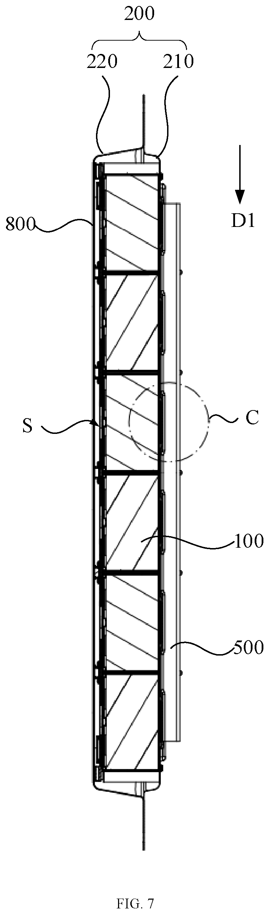

In the technical solutions of the embodiments of the present application, the electrode terminal of the cell 100 is arranged on the side of the can facing away from the cover 210, so that when the battery 10 is designed, a predetermined space S needs to be reserved on only a side of the cell 100 facing away from the cover 210. In this way, as shown in FIG. 7, the predetermined space S can serve as both a bottom ball impact space and a high-voltage space of the battery 10, and can avoid independently arranging a bottom ball impact space and a high-voltage space inside the box 200, thereby improving space utilization of the battery 10.

In some embodiments, the cell 100 further includes a vent mechanism, where the vent mechanism is arranged on a side of the can facing away from the cover plate 211. The vent mechanism is configured to release a gas or a liquid inside the cell 100 when a temperature or a pressure of the cell 100 exceeds a safety threshold, to reduce pressure inside the cell 100, thereby reduce a risk of explosion of the cell 100.

In the technical solutions of the embodiments of the present application, the vent mechanism of the cell 100 is arranged on the side of the can facing away from the cover 210, so that when the battery 10 is designed, a predetermined space S needs to be reserved on only a side of the cell 100 facing away from the cover 210. In this way, the predetermined space S can serve as both a bottom ball impact space, a high-voltage space, and a vent space of the battery 10, and can avoid independently arranging a bottom ball impact space, a high-voltage space, and a vent space inside the box 200, thereby improving space utilization of the battery 10.

Referring to FIG. 2 and FIG. 3, in some embodiments, the battery 10 further includes a mounting beam 400, where the mounting beam 400 is connected to a surface of the cover plate 211 facing away from the cell 100, and the mounting beam 400 is configured to connect to a frame 20 of the vehicle 1.

One or more mounting beams 400 may be provided, and the mounting beam 400 may extend along a width direction or a length direction of the cover 210. In addition, when a plurality of mounting beams 400 are provided, extending directions of the plurality of mounting beams 400 may be the same or different, and the plurality of mounting beams 400 may be connected to each other or may be arranged at intervals. In addition, a cross-sectional shape of the mounting beam 400 may be a square shape, a trapezoidal shape, or the like. A quantity, an extending direction, a cross-sectional shape, and the like of the mounting beams 400 may all be set according to requirements.

For example, referring to FIG. 2 and FIG. 3, two mounting beams 400 are provided. The two mounting beams 400 both extend along a width direction of the cover 210, and the two mounting beams 400 are spaced apart in a length direction of the cover 210. Arranging two mounting beams 400 can distribute an acting force borne by the cover 210, reduce a risk of deformation of or damage to the cover 210 due to excessive local stress, so that the cover plate 211 protects the heat exchange assembly 300 more effectively. In addition, arranging two mounting beams 400 helps reduce a possibility of swinging of the battery 10, so that the whole battery 10 is more stably mounted on the frame 20.

Specifically, the mounting beam 400 may be made of a material such as steel or aluminum alloy. In addition, the mounting beam 400 may be fixedly connected to the cover plate 211 in a manner such as welding, screwing, or riveting, is fixedly connected to the frame 20 by a structure such as a fastener or a lock, and may be arranged according to requirements.

In the technical solutions of the embodiments of the present application, the mounting beam 400 is fixed to the surface of the cover plate 211 facing away from the cell 100, and may serve as a reinforcing rib of the cover 210, to enhance the structural strength of the cover 210, to enable the cover 210 to effectively protect the heat exchange assembly 300, thereby improving safety performance of the battery 10. In addition, compared with directly connecting an edge of the cover 210 to the frame 20, in the technical solutions of the embodiments of the present application, the mounting beam 400 is arranged on a surface of the cover plate 211 facing away from the cell 100 and is connected to the frame 20 by the mounting beam 400. Therefore, the center of gravity of the battery 10 is closer to a mounting point, a transfer path of the gravity is shorter, that is, the arm of the gravity of the battery 10 is shorter, and the moment generated by the gravity of the battery 10 is smaller. In this way, the thickness of the cover 210 can be designed to be smaller, which is beneficial to the lightweight design of the battery 10.

Referring to FIG. 2 and FIG. 3, in some embodiments, the mounting beam 400 is welded to a surface of the cover plate 211 facing away from the cell 100. The mounting beam 400 and the cover 210 are welded by using a welding process, helping the mounting beam 400 be stably connected to the cover 210. In addition, in the embodiments of the present application, since no heat exchange flow channel is integrated inside the cover plate 211, which provides great freedom for selection of a preparation process and a material of the cover plate 211, when the mounting beam 400 is welded to the cover plate 211, the mounting beam 400 and the cover plate 211 may be prepared by selecting a same material, which helps improve welding stability between the mounting beam 400 and the cover plate 211 and simplify a welding process. For example, the cover plate 211 and the mounting beam 400 may both be made of steel. In this way, the cover plate 211 and the mounting beam 400 may be welded firmly, and the welding process between the two is simple.

Referring to FIG. 2 and FIG. 3, in some embodiments, one of the mounting beam 400 and the frame 20 is provided with a first through hole (not shown in the figure, the same below), and the other of the mounting beam 400 and the frame 20 is provided with a first threaded hole (not shown in the figure, the same below). Referring to FIG. 3, the battery 10 further includes a first fastener 410, where the first fastener 410 passes through the first through hole and is threadedly connected into the first threaded hole.

It may be understood that, in an implementation, the mounting beam 400 is provided with a first through hole, and the frame 20 is provided with a first threaded hole. In this case, after passing through the first through hole on the mounting beam 400, the first fastener 410 is threadedly connected into the first threaded hole on the frame 20, to fix the battery 10 to the frame 20. In another implementation, the mounting beam 400 is provided with a first threaded hole, and the frame 20 is provided with a first through hole. In this case, after passing through the first through hole on the frame 20, the first fastener 410 is threadedly connected into the first threaded hole on the mounting beam 400, to fix the battery 10 to the frame 20.

In the technical solutions of the embodiments of the present application, one or more first through holes may be provided, a quantity of first threaded holes and a quantity of first fasteners 410 are equal to a quantity of first through holes, and a position of the first threaded hole corresponds to a position of the first through hole. For example, the mounting beam 400 is provided with a plurality of first through holes, and the plurality of first through holes are sequentially arranged at equal intervals along a length direction of the mounting beam 400. In this case, the frame 20 is provided with a plurality of first threaded holes, where positions of the plurality of first threaded holes are in a one-to-one correspondence with positions of the plurality of first through holes. Providing the plurality of first through holes arranged at equal intervals on the mounting beam 400 is more beneficial to uniform distribution of stress on the mounting beam 400.

In the technical solutions of the embodiments of the present application, the mounting beam 400 and the frame 20 are connected by the first fastener 410, so that the battery 10 in a use state is stably connected to the frame 20, and the battery 10 can be conveniently removed from the frame 20 when the battery 10 needs to be maintained and replaced, thereby improving maintenance efficiency of the battery 10.

Referring to FIG. 2 and FIG. 3, in some embodiments, the battery 10 further includes a seat beam 500, where the seat beam 500 is connected to a surface of the cover plate 211 facing away from the cell 100.

Specifically, one or more seat beams 500 may be provided, and the seat beam 500 may extend along a width direction or a length direction of the cover 210. In addition, when a plurality of seat beams 500 are provided, extending directions of the plurality of seat beams 500 may be the same or different, and the plurality of seat beams 500 may be connected to each other or may be arranged at intervals. In addition, a cross-sectional shape of the seat beam 500 may be a square shape, a trapezoidal shape, or the like. A quantity, an extending direction, a cross-sectional shape, and the like of the seat beams 500 may all be set according to requirements.

For example, referring to FIG. 2 and FIG. 3, two seat beams 500 are provided. The two seat beams 500 both extend along a width direction of the cover plate 211, and the two seat beams 500 are spaced apart in a length direction of the cover plate 211. Arranging two seat beams 500 can distribute the gravity of seats and occupants and can enhance structural strength of the cover 210, thereby reducing a risk of deformation of or damage to the cover 210 due to excessive local stress.

Specifically, the seat beam 500 may be made of a material such as steel or aluminum alloy. In addition, the seat beam 500 may be fixedly connected to the cover plate 211 in a manner such as welding, screwing, or riveting.

In the technical solutions of the embodiments of the present application, the seat beam 500 is fixed to the surface of the cover plate 211 facing away from the cell 100, and the seat beam 500 may serve as a reinforcing rib of the cover 210, to enhance the structural strength of the cover 210, to enable the cover 210 to effectively protect the heat exchange assembly 300, thereby improving safety performance of the battery 10.

Referring to FIG. 2 and FIG. 3, in some embodiments, the seat beam 500 is welded to a surface of the cover plate 211 facing away from the cell 100. The seat beam 500 and the cover 210 are welded by using a welding process, helping the seat beam 500 be stably connected to the cover 210. In addition, in the embodiments of the present application, since no heat exchange flow channel is integrated inside the cover 210, which provides great freedom for selection of a preparation process and a material of the cover 210, when the seat beam 500 is welded to the cover plate 211, the seat beam 500 and the cover plate 211 may be prepared by selecting a same material, which helps improve welding stability between the seat beam 500 and the cover plate 211 and simplify a welding process. For example, the cover plate 211 and the seat beam 500 may both be made of steel. In this way, the cover plate 211 and the seat beam 500 may be welded firmly, and the welding process between the two is simple.

In some embodiments, the seat beam 500 is configured to connect to the frame 20 of the vehicle 1. Specifically, the seat beam 500 may be fixedly connected to the frame 20 by a structure such as a fastener or a lock, and may be arranged according to requirements.

In the technical solutions of the embodiments of the present application, the seat beam 500 can directly transfer the weight of occupants of the vehicle 1 to the frame 20. The pressure transferred from the cover plate 210 to the heat exchange assembly 300 can be reduced, thereby reducing a risk of deformation of the heat exchange assembly 300 and improving safety performance of the battery 10.

Referring to FIG. 3, in some embodiments, one of the seat beam 500 and the frame 20 is provided with a second through hole 510, and the other of the seat beam 500 and the frame 20 is provided with a second threaded hole (not shown in the figure, the same below). The battery 10 further includes a second fastener (not shown in the figure, the same below), where the second fastener passes through the second through hole 510 and is threadedly connected into the second threaded hole.

It may be understood that, in an implementation, the seat beam 500 is provided with a second through hole 510, and the frame 20 is provided with a second threaded hole. In this case, after passing through the second through hole 510 on the seat beam 500, the second fastener is threadedly connected into the second threaded hole on the frame 20, to fix the seat beam 500 to the frame 20. In another implementation, the seat beam 500 is provided with a second threaded hole, and the frame 20 is provided with a second through hole 510. In this case, after passing through the second through hole 510 on the frame 20, the second fastener is threadedly connected into the second threaded hole on the seat beam 500, to fix the seat beam 500 to the frame 20.

In the technical solutions of the embodiments of the present application, one or more second through holes 510 may be provided, a quantity of second threaded holes and a quantity of second fasteners are equal to a quantity of second through holes 510, and a position of the second threaded hole corresponds to a position of the second through hole 510. For example, referring to FIG. 3, two ends of the seat beam 500 are each provided with a second through hole 510. In this case, a second threaded hole is provided at a corresponding position on a frame 20. The seat beam 500 has two connection points to the frame 20, which is beneficial to stable connection of the seat beam 500 to the frame 20.

In the technical solutions of the embodiments of the present application, the seat beam 500 and the frame 20 are connected by the second fastener, so that the seat beam 500 can be stably connected to the frame 20, and disassembly, assembly, and maintenance of seats and the battery 10 that are connected to the seat beam 500 can be facilitated.

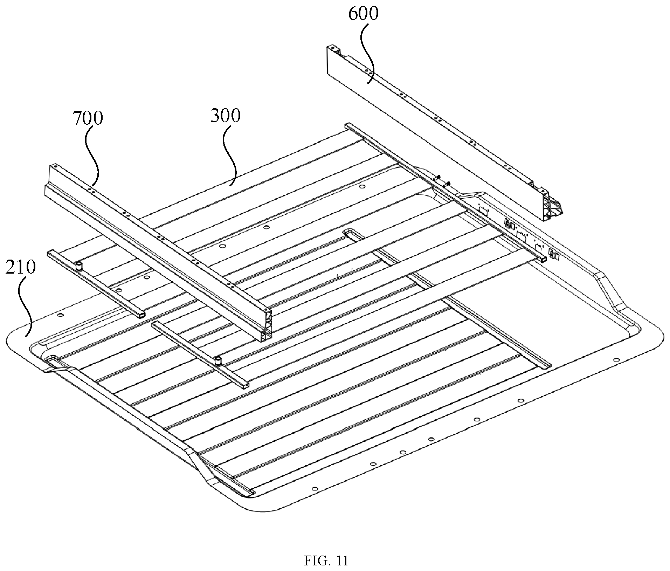

Referring to FIG. 2 and FIG. 9 to FIG. 12, in some embodiments, the cell 10 further includes a first expansion beam 600 and a second expansion beam 700, where the first expansion beam 600 and the second expansion beam 700 are connected to a side of the cover plate 211 facing the cell 100, and the cell 100 is arranged between the first expansion beam 600 and the second expansion beam 700.

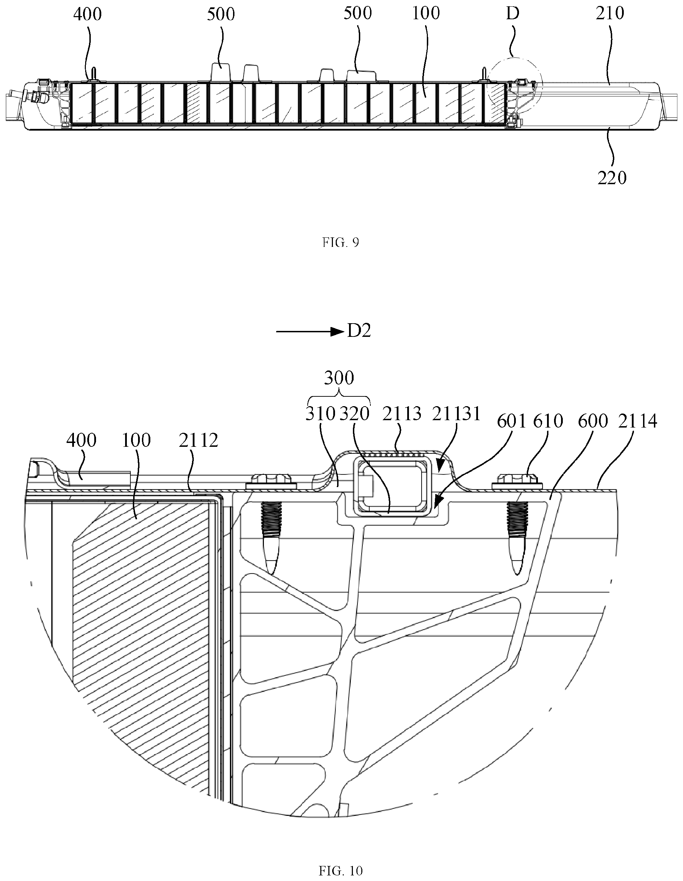

The first expansion beam 600 may be made of a material such as steel or aluminum alloy, and the first expansion beam 600 may be fixedly connected to a surface of the cover plate 211 facing the cell 100 in a manner such as welding, screwing, or riveting. The second expansion beam 700 and the first expansion beam 600 may be made of a same material or different materials. The second expansion beam 700 and the first expansion beam 600 may be connected to the cover plate 211 in a same connection manner or different connection manners, and may be arranged according to requirements. For example, referring to FIG. 10, the first expansion beam 600 is provided with a third threaded hole (not shown in the figure, the same below), the cover 210 is provided with a third through hole (not shown in the figure, the same below), and the battery 10 further includes a third fastener 610. After passing through the third through hole, the third fastener 610 is screwed into the third threaded hole, and can fix the first expansion beam 600 to the surface of the cover plate 211 facing the cell 100.

Referring to FIG. 2, in an implementation, the first expansion beam 600 and the second expansion beam 700 may be spaced apart along a length direction of the cover 210, and both extend along a width direction of the cover 210. In another implementation, the first expansion beam 600 and the second expansion beam 700 may be spaced apart along a width direction of the cover 210, and both extend along a length direction of the cover 210, and may be arranged according to requirements.

In the technical solutions of the embodiments of the present application, the first expansion beam 600 and the second expansion beam 700 can resist the expansion force of the cell 100, thereby improving safety performance of the battery 10. In addition, the first expansion beam 600 and the second expansion beam 700 are fixedly connected to the cover 210, which can enhance the structural strength of the cover 210, so that the cover 210 protects the heat exchange assembly 300 and the cell 100 more effectively, thereby further improving safety performance of the battery 10.

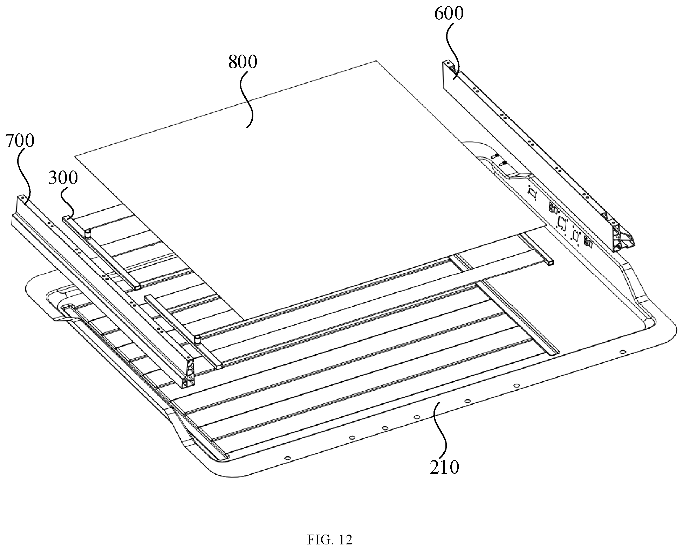

Referring to FIG. 2 and FIG. 12, in some embodiments, a plurality of cells 100 are provided, and the battery 10 further includes a heat spreader 800, where the heat spreader 800 is arranged between the plurality of cells 100 and the heat exchange assembly 300.

Specifically, the heat spreader 800 may be made of one or more of metal materials having high thermal conductivity coefficients, such as aluminum and copper. The heat spreader 800 may be fixedly connected to a surface of the cover plate 211 facing the cell 100 in a manner such as bonding or welding. The heat spreader 800 may be fixedly connected to the cell 100 in a manner such as bonding, screwing, or clamping by a clamp, and may be arranged according to requirements.

In the technical solutions of the embodiments of the present application, heat generated by the plurality of cells 100 can be evenly dispersed by the heat spreader 800, to avoid generation of a hot spot inside the battery 10 as much as possible. The presence of the heat spreader 800 can further provide a larger heat conduction area and a better heat dissipation path, increase a heat transfer speed, and improve heat exchange efficiency between the heat exchange assembly 300 and the cell 100.

Referring to FIG. 2, FIG. 7, and FIG. 9, in some embodiments, the cell 100 further includes a bottom guard 220, where the bottom guard 220 and the cover 210 enclose an accommodating cavity 201 capable of accommodating the heat exchange assembly 300 and the cell 100, to protect the cell 100 and the heat exchange assembly 300, to prevent the cell 100 and the heat exchange assembly 300 from external impact as much as possible.

In an implementation, referring to FIG. 2, the bottom guard 220 may include a guard bottom wall 221 and a guard side wall 222 connected to an outer edge of the guard bottom wall 221. The guard side wall 222 and the guard bottom wall 221 form a frame-shaped structure having an opening at one end. In this case, the bottom guard 220 and the plate-shaped cover 210 may enclose an accommodating cavity 201. That is, the cover plate 211 covers an opening side of the bottom guard 220.

In an implementation, the bottom guard 220 is a plate-shaped structure. In this case, referring to FIG. 2, the cover 210 may include a cover plate 211 and a cover side wall 212 connected to an edge of the cover plate 211. The cover plate 211 and the cover side wall 212 form a frame-shaped structure having an opening at one end. The bottom guard 220 covers an opening side of the cover 210 and then, together with the cover 210, encloses an accommodating cavity 201.

In an implementation, referring to FIG. 2, the cover 210 includes a cover plate 211 and a cover side wall 212 connected to an edge of the cover plate 211. The cover plate 211 and the cover side wall 212 form a frame-shaped structure having an opening at one end. The bottom guard 220 includes a guard bottom wall 221 and a guard side wall 222 connected to an edge of the guard bottom wall 221. The guard side wall 222 and the guard bottom wall 221 form a frame-shaped structure having an opening at one end. An opening side of the cover plate 211 and an opening side of the bottom guard 220 cover each other and enclose an accommodating cavity 201.

Specifically, the bottom guard 220 may be made of a material such as steel or aluminum alloy. The cover 210 and the bottom guard 220 may be made of a same material or different materials. For example, the cover 210 and the bottom guard 220 may both be made of steel. Such design may enable the battery 10 as a whole to have high structural strength. For another example, the cover 210 is made of stainless steel, and the bottom guard 220 is made of aluminum alloy. Such design can enable the cover 210 to maintain high structural strength and effectively protect the heat exchange assembly 300 and the cell 100 in the accommodating cavity 201 when being stepped on. Moreover, the bottom guard 220 can be formed from aluminum alloy through one-time stretching, and has a simple manufacturing process. In addition, the aluminum alloy material has a good thermal conductivity coefficient, which is beneficial to heat dissipation of the cell 100.

In some embodiments, the cover 210 is a steel cover. The steel cover has high structural strength, and can absorb and disperse an external acting force effectively, thereby reducing pressure on the heat exchange assembly 300, reducing a risk of deformation of the heat exchange assembly 300, and improving safety performance of the battery 10.

In some embodiments, the heat exchange assembly 300 is an aluminum heat exchanger. The aluminum heat exchanger is easy to process and form, has good thermal conductivity, and is lightweight, so that processing costs of the heat exchange assembly 300 can be reduced, heat exchange efficiency can be improved, and the lightweight design of the battery 10 can be facilitated.

Referring to FIG. 1, the embodiments of the present application provide a vehicle 1. The vehicle 1 includes the foregoing battery 10.

In the technical solutions of the embodiments of the present application, the vehicle 1 includes the battery 10 according to the foregoing embodiments, so that the vehicle 1 also has the technical effects corresponding to the foregoing battery 10. Details are not described herein again.

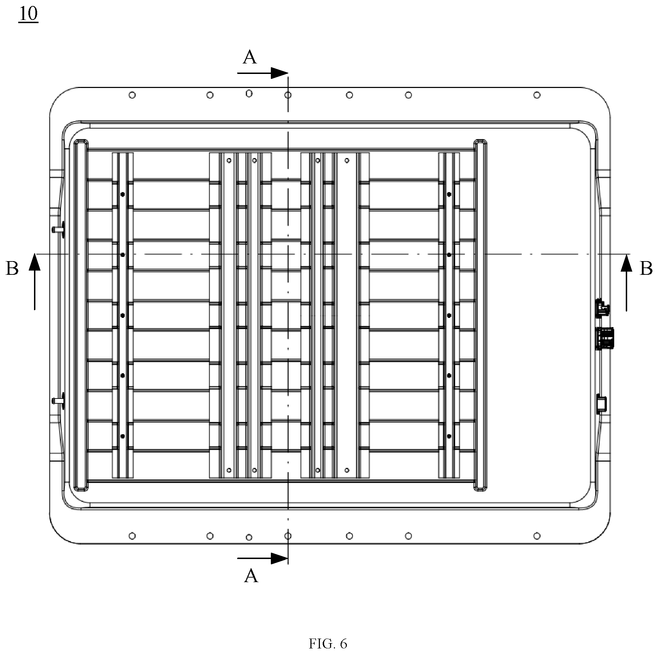

Referring to FIG. 1 to FIG. 12, in some embodiments, the battery 10 includes a cell 100, a box 200, a heat exchange assembly 300, a mounting beam 400, a seat beam 500, a first expansion beam 600, a second expansion beam 700, a heat spreader 800, a first fastener 410, a second fastener, and a third fastener 610.

Referring to FIG. 1 to FIG. 4, the cover 210 includes a cover plate 211 and a cover side wall 212 connected to an outer edge of the cover plate 211. The cover side wall 212 and the cover plate 211 form a frame structure having an opening at one end. The bottom guard 220 includes a guard bottom wall 221 and a guard side wall 222 connected to an outer edge of the guard bottom wall 221. The guard side wall 222 and the guard bottom wall 221 form a frame structure having an opening at one end. An opening side of the bottom guard 220 and an opening side of the cover 210 cover each other. The bottom guard 220 and the cover 210 enclose an accommodating cavity 201 capable of accommodating the cell 100 and the heat exchange assembly 300.

Referring to FIG. 3 and FIG. 4, the cover plate 211 includes six first reinforcing portions 2111, seven first plates 2112, two second reinforcing portions 2113, and one second plate 2114. The first reinforcing portions 2111 and the first plates 2112 all extend along a length direction of the cover plate 211, and the six first reinforcing portions 2111 and the seven first plates 2112 are sequentially alternately connected in a width direction of the cover plate 210. The two second reinforcing portions 2113 both extend along a width direction of the cover plate 211. One of the two second reinforcing portions 2113 is connected to one end of each of the six first reinforcing portions 2111 and the seven first plates 2112, and the other of the two second reinforcing portions 2113 is connected to the other end of each of the six first reinforcing portions 2111 and the seven first plates 2112. The second plate 2114 is connected to a side of the first reinforcing portion 2111 facing away from the first reinforcing portion 2111 and the first plate 2112. The first plate 2112 and the second plate 2114 are located in a same plane.

Referring to FIG. 4, each first reinforcing portion 2111 is provided with a first accommodating groove 21111 extending along an extending direction of the first reinforcing portion 2111, each second reinforcing portion 2113 is provided with a second accommodating groove 21131 extending along an extending direction of the second reinforcing portion 2113, and two ends of each first accommodating groove 21111 respectively communicate with two second accommodating grooves 21131.

Referring to FIG. 5, the heat exchange assembly 300 includes six heat exchange tubes 310 and three manifolds 320. The six heat exchange tubes 310 are respectively bonded into six first accommodating grooves 21111. Two manifolds 320 in the three manifolds 320 are bonded to a same second accommodating groove 21131 at an interval, and a liquid inlet 321 and a liquid outlet 322 are respectively provided on the two manifolds 320. The manifold 320 provided with the liquid inlet 321 communicates with first ends of three heat exchange tubes 310. The manifold 320 provided with the liquid outlet 322 communicates with first ends of the other three heat exchange tubes 310. The remaining manifold 320 in the three manifolds 320 is arranged in another second accommodating groove 21131, and the manifold 320 communicates with second ends of all the six heat exchange tubes 310. It should be noted that an arrow in FIG. 5 indicates a flow direction of a heat exchange medium inside the heat exchange assembly 300.

Referring to FIG. 4 and FIG. 12, the heat spreader 800 is bonded to surfaces of the six heat exchange tubes 310 facing the cell 100. Meanwhile, the heat spreader 800 is bonded to surfaces of the six first plates 2112 facing the cell 100.

Referring to FIG. 1, FIG. 7, and FIG. 9, a plurality of cells 100 are provided. The plurality of cells 100 are arranged in an array along a length direction and a width direction of the cover 210. The cells 100 are all bonded to a side of the heat spreader 800 facing away from the cover 210. Vent mechanisms of a positive electrode terminal and a negative electrode terminal of each cell 100 are both arranged facing away from the heat spreader 800.

Referring to FIG. 2 and FIG. 3, two mounting beams 400 are provided. The two mounting beams 400 are both welded to a surface of the cover plate 211 facing away from the cell 100, and the two mounting beams 400 both extend along a width direction of the cover 210 and are spaced apart in a length direction of the cover 210. Each mounting beam 400 is provided with a plurality of first through holes arranged along a length direction of the mounting beam 400. After passing through a first through hole on the mounting beam 400, the first fastener 410 is threadedly connected into the first threaded hole into a first threaded hole on a frame 20, to fix the mounting beam 400 to the frame 20.

Referring to FIG. 2 and FIG. 3, two seat beams 500 are provided. The two seat beams 500 are both welded to a surface of the cover plate 211 facing away from the cell 100, the two seat beams 500 both extend along a width direction of the cover 210 and are spaced apart in a length direction of the cover 210, and the two seat beams 500 are located between two mounting beams 400. A pair of second through holes 510 are provided at two ends of each seat beam 500 respectively. After passing through the second through hole 510 on the seat beam 500, the second fastener is threadedly connected to a second threaded hole on the frame 20, to fix the seat beam 500 to the frame 20.

Referring to FIG. 2 and FIG. 10, the first expansion beam 600 and the second expansion beam 700 both extend along a width direction of the cover 210 and are spaced apart in a length direction of the cover 210. The first expansion beam 600 and the second expansion beam 700 are located on two sides of the cell 100 in the length direction of the cover 210. The first expansion beam 600 and the second expansion beam 700 are each provided with a third threaded hole. The cover 210 is provided with a third through hole. After passing through the third through hole, the third fastener 610 is threadedly connected into the third threaded hole, and can fix the first expansion beam 600 and the second expansion beam 700 to a side of the cover plate 211 facing the cell 100. A surface of the first expansion beam 600 facing the second reinforcing portion 2113 is further provided with an installation groove 601 capable of accommodating a bottom of the manifold 320, so that the manifold 320 can be clamped between the first expansion beam 600 and the second reinforcing portion 2113.

Finally, it should be noted that the foregoing embodiments are merely used for describing the technical solutions of the present application, but are not intended to limit the present application. Although the present application is described in detail with reference to the foregoing embodiments, a person of ordinary skill in the art shall understand that, modifications may still be made to the technical solutions in the foregoing embodiments, or equivalent replacements may be made to some or all of the technical features. The modifications and equivalent replacements, which do not make the essence of the corresponding technical solutions depart from the scope of the technical solutions of the embodiments of the present application, fall within the scope of the claims and specification hereof. In particular, the various technical features mentioned in the various embodiments can be combined in any way provided that there is no structural conflict. The present application is not limited to the specific embodiments disclosed in this specification, but includes all technical solutions falling within the scope of the claims.

## Claims

1. A battery, comprising:
a cell;
a box, configured to accommodate the cell, wherein the box comprises a cover, wherein the cover is configured to serve as at least a part of a floor of a vehicle, and the cover comprises a cover plate, wherein the cover plate comprises a first reinforcing portion and at least two first plates, wherein the first reinforcing portion is connected between two adjacent first plates and protrudes from surfaces of the first plates facing away from the cell, and a surface of the first reinforcing portion facing the cell is concavely provided with a first accommodating groove; and
a heat exchange assembly, at least partially embedded in the first accommodating groove and is thermally conductively connected to the cell.

2. The battery according to claim 1, wherein the heat exchange assembly comprises a plurality of heat exchange tubes, a plurality of first reinforcing portions are provided, the first reinforcing portions and the first plates are alternately arranged, and the plurality of first accommodating grooves respectively accommodate the plurality of heat exchange tubes.

3. The battery according to claim 2, wherein the heat exchange assembly further comprises a manifold, wherein the manifold communicates with same ends of the at least two heat exchange tubes.

4. The battery according to claim 3, wherein the cover plate further comprises a second reinforcing portion, wherein the second reinforcing portion and the first reinforcing portion are arranged to intersect with each other, and a surface of the second reinforcing portion facing the cell is concavely provided with a second accommodating groove, wherein the second accommodating groove is configured to accommodate the manifold.

5. The battery according to claim 4, wherein the first reinforcing portion and the second reinforcing portion are perpendicular to each other.

6. The battery according to any one of claims 1 to 5, wherein the cell is connected to the first plate.

7. The battery according to claim 6, wherein the cell is connected to the heat exchange assembly.

8. The battery according to claim 7, wherein the heat exchange assembly is connected to the cover.

9. The battery according to any one of claims 6 to 8, wherein the cell comprises a can and an electrode terminal arranged on a wall of the can, wherein a side of the can facing away from the electrode terminal is connected to the first plate.

10. The battery according to claim 9, wherein the cell further comprises a vent mechanism, wherein the vent mechanism is arranged on a side of the can facing away from the cover plate.

11. The battery according to any one of claims 1 to 10, wherein the battery further comprises a mounting beam, wherein the mounting beam is connected to a surface of the cover plate facing away from the cell, and the mounting beam is configured to connect to a frame of the vehicle.

12. The battery according to any one of claims 1 to 11, wherein the battery further comprises a seat beam, wherein the seat beam is connected to a surface the cover plate facing away from the cell.

13. The battery according to claim 12, wherein the seat beam is configured to connect to the frame of the vehicle.

14. The battery according to any one of claims 1 to 13, further comprising a first expansion beam and a second expansion beam, wherein the first expansion beam and the second expansion beam are connected to a side of the cover plate facing the cell, and the cell is arranged between the first expansion beam and the second expansion beam.

15. The battery according to any one of claims 1 to 14, wherein a plurality of cells are provided, and the battery further comprises a heat spreader, wherein the heat spreader is arranged between the plurality of cells and the heat exchange assembly.

16. The battery according to any one of claims 1 to 15, wherein the case further comprises a bottom guard, wherein the bottom guard and the cover enclose an accommodating cavity capable of accommodating the heat exchange assembly and the cell.

17. The battery according to any one of claims 1 to 16, wherein the cover is a steel cover; and/or the heat exchange assembly is an aluminum heat exchanger.

18. A vehicle, comprising the battery according to any one of claims 1 to 17.
